(19) Europäisches Patentamt
European Patent Office
Office européen des brevets

(11) **EP 2 554 852 B1**

(12) **EUROPEAN PATENT SPECIFICATION**

(45) Date of publication and mention
of the grant of the patent:
**16.05.2018 Bulletin 2018/20**

(51) Int Cl.:
***F04F 5/46*** *(2006.01)*     ***F25B 1/00*** *(2006.01)*

(21) Application number: **10848925.3**

(22) Date of filing: **31.03.2010**

(86) International application number:
**PCT/JP2010/055804**

(87) International publication number:
**WO 2011/121747 (06.10.2011 Gazette 2011/40)**

(54) **EJECTOR, METHOD FOR FOAMING DRIVE FLUID, AND REFRIGERATION CYCLE APPARATUS**

EJEKTOR, VERFAHREN ZUR SCHÄUMUNG EINES ANTRIEBSFLUIDS UND KÄLTEKREISLAUFVORRICHTUNG

EJECTEUR, PROCÉDÉ DE MOUSSAGE DE FLUIDE D'ENTRAÎNEMENT, ET APPAREIL À CYCLE DE RÉFRIGÉRATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.02.2013 Bulletin 2013/06**

(73) Proprietor: **Mitsubishi Electric Corporation Tokyo 100-8310 (JP)**

(72) Inventors:
• **HIGASHIIUE, Shinya**
**Tokyo 100-8310 (JP)**
• **NOMOTO, So**
**Tokyo 100-8310 (JP)**
• **MINAMISAKO, Hirokazu**
**Tokyo 100-8310 (JP)**

(74) Representative: **Pfenning, Meinig & Partner mbB Patent- und Rechtsanwälte Theresienhöhe 11a 80339 München (DE)**

(56) References cited:
| | |
|---|---|
| EP-A1- 0 169 526 | GB-A- 796 066 |
| JP-A- H 062 964 | JP-A- 2003 139 098 |
| JP-A- 2003 185 275 | JP-A- 2004 239 145 |
| JP-A- 2006 017 444 | NL-A- 7 512 298 |
| US-A- 2 268 656 | US-A1- 2004 052 656 |
| US-A1- 2005 118 032 | US-A1- 2009 013 704 |

**Description**

Technical Field

The present invention relates to an ejector that uses velocity energy of a two-phase refrigerant ejected from a nozzle at a high velocity to circulate a refrigerant that is present therearound by drawing in the refrigerant.

Background Art

US 2 268 656 A discloses aspects of the following: An ejector including a nozzle having a flow path in which a motive fluid flowing from an upstream side undergoes pressure reduction and is made to flow into a mixing section provided on a downstream side, the ejector comprising: the flow path of the nozzle including a narrowing flow path in which the cross-sectional area of the flow path gradually decreases toward the downstream side, a constant-cross-section flow path having a substantially constant cross-sectional shape while extending from a downstream end of the narrowing flow path, the constant-cross-section flow path being continuous for a predetermined length, and a widening flow path continuous with a downstream end of the constant-cross-section flow path and in which the cross-sectional area of the flow path gradually increases toward the downstream side.

JP H06 2964 A discloses aspects of the following: A motive fluid foaming method applied to an ejector including a nozzle having a flow path in which a motive fluid flowing from an upstream side is made to flow into a mixing section provided on a downstream side, the foaming method of the motive fluid flowing into the mixing section comprising a step of foaming the motive fluid in the liquid state at a midway point of a predetermined length of the constant-cross-section flow path.

US 2004/052656 A1 discloses aspects of the following: A refrigeration cycle apparatus, comprising: a compressor, a radiator, an ejector, and a gas-liquid separator that are connected in order by refrigerant pipings and an evaporator connected to the ejector and to the gas-liquid separator, the ejector including an inlet for a motive fluid that is connected to a refrigerant outlet of the radiator, an inlet for a suction fluid that is connected to a refrigerant outlet of the evaporator, an outlet from which a mixture of the motive fluid and the suction fluid flows out that is connected to the gas-liquid separator, and a nozzle having a flow path in which the motive fluid flowing thereinto through the inlet for the motive fluid that is provided on an upstream side undergoes pressure reduction and is made to flow into a mixing section provided on a downstream side.

Some refrigeration cycle apparatuses utilize a two-phase ejector. The nozzle of a two-phase ejector includes a convergent taper portion in which the cross-sectional area of the flow path decreases in a flow direction from the nozzle inlet, a throat portion at which the cross-sectional area of the flow path is smallest, and a divergent taper portion in which the cross-sectional area of the flow path increases in the flow direction from the throat portion. A refrigerant having flowed into the nozzle undergoes pressure reduction while flowing through the convergent taper portion to the throat portion at an increasing velocity. When the pressure reaches a value equivalent or below the saturation liquid line, the refrigerant foams and expands. The refrigerant is promoted to expand in the divergent taper portion and undergoes further pressure reduction. Subsequently, the refrigerant in the form of a high-velocity, two-phase, gas-liquid refrigerant that has undergone pressure reduction and expansion is ejected from the nozzle.

The flow rate of the refrigerant passing through the nozzle is greatly affected by the diameter of the throat portion. Practically, the diameter of the throat portion ranges from 0.5 to 2.0 mm. The angles of the convergent taper portion and the divergent taper portion are desired to be gentle so that occurrence of eddies is suppressed. For example, it is known that the angle of the convergent taper portion is desirably about 5°, and the angle of the divergent taper portion is desirably 3° or smaller.

(1) To manufacture such a nozzle, the length of the flow path defined by the convergent taper portion and the divergent taper portion is to be about twenty times larger than the diameter of the throat portion. Therefore, in cases where such a nozzle is processed by cutting, deterioration of accuracy in the roundness of the flow path of the nozzle and damage to cutting tools frequently occur.

(2) If electric discharge machining is employed in the manufacturing process, cost increases.

(3) If casting is employed, the accuracy in finishing of the inner surface of the nozzle deteriorates. Therefore, casting is not suitable for mass production of nozzles.

To solve the above problems, in Patent Literature 1, the convergent taper portion is a two-stage taper, whereby the taper length is reduced and the ease of processing during manufacture of the nozzle is increased (Fig. 5 in Patent Literature 1).

Citation List

Patent Literature

Patent Literature 1: Japanese Unexamined Patent Application Publication No. 2003-139098 (Fig. 5)

Summary of Invention

Technical Problem

In Patent Literature 1, however, the ease of processing regarding the length of the divergent taper portion is not improved. Since the divergent taper portion is very long relative to the diameter of the throat portion, difficulty in performing cutting for obtaining the divergent taper portion still disadvantageously exists.

It is an object of the present invention to provide an ejector including a nozzle whose divergent taper portion is easily processable by cutting. Solution to Problem

An ejector according to the invention has a nozzle having a flow path in which a motive fluid flowing from an upstream side undergoes pressure reduction and is made to flow into a mixing section provided on a downstream side. The ejector includes the flow path of the nozzle including a narrowing flow path in which the cross-sectional area of the flow path gradually decreases toward the downstream side, a constant-cross-section flow path having a substantially constant cross-sectional shape while extending from a downstream end of the narrowing flow path, the constant-cross-section flow path being continuous for a predetermined length, and a widening flow path continuous with a downstream end of the constant-cross-section flow path and in which the cross-sectional area of the flow path gradually increases toward the downstream side.

Advantageous Effects of Invention

According to the present invention, an ejector including a nozzle whose divergent taper portion is easily processable by cutting is provided.

Brief Description of Drawings

[Fig. 1] Fig. 1 is a schematic diagram of a refrigeration cycle apparatus 1000 according to Embodiment 1.
[Fig. 2] Fig. 2 is a schematic diagram of an ejector 103 according to Embodiment 1.
[Fig. 3] Fig. 3 is a schematic diagram of a nozzle 201 included in the ejector 103 according to Embodiment 1.
[Fig. 4] Fig. 4 is a Mollier chart of the refrigeration cycle apparatus 1000 according to Embodiment 1.
[Fig. 5] Fig. 5 illustrates the relationship between the pressure inside the nozzle, the velocity, and the void fraction and the distance from the inlet of the nozzle in a case where a cylindrical flow path length L2 is zero.
[Fig. 6] Fig. 6 illustrates flow characteristics of the ejector 103 according to Embodiment 1.
[Fig. 7] Fig. 7 is a diagram that explains the decrease of the length of a divergent taper portion 201c of the ejector 103 according to Embodiment 1.
[Fig. 8] Fig. 8 is a schematic diagram of an ejector 103 having a needle valve according to Embodiment 1.
[Fig. 9] Fig. 9 is a schematic diagram of another refrigeration cycle apparatus according to Embodiment 1.

Description of Embodiments

Embodiment 1

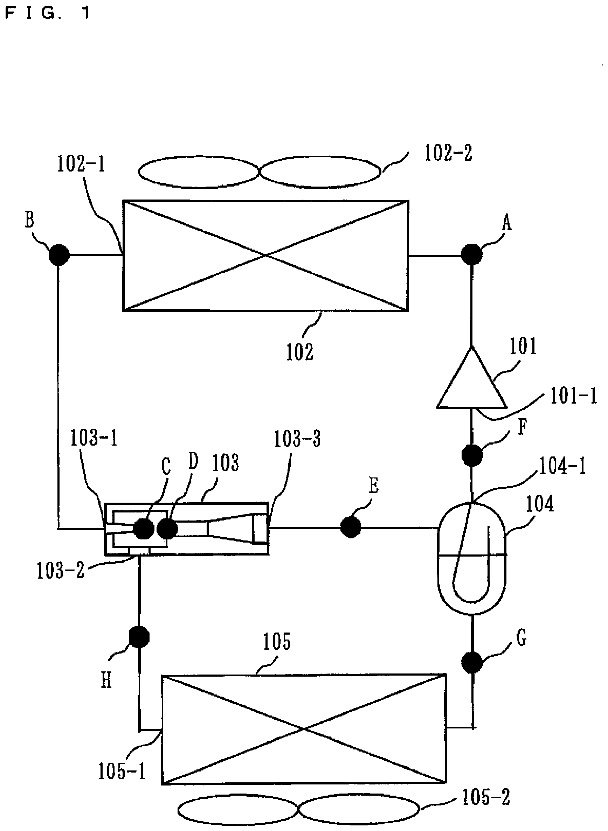

Referring to Figs. 1 to 9, a refrigeration cycle apparatus according to Embodiment 1 will now be described.

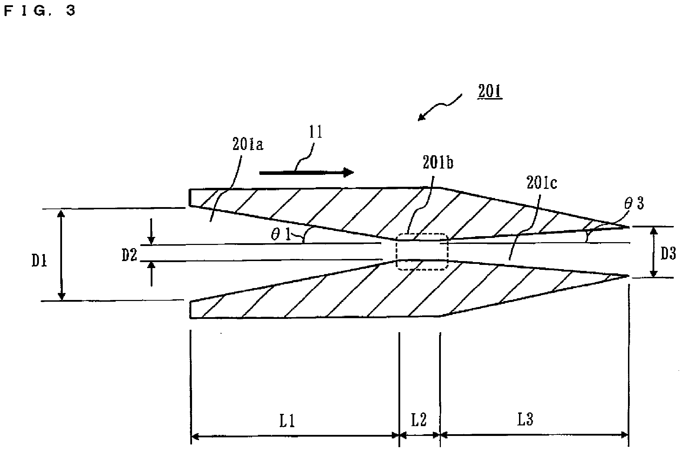

Fig. 1 is a schematic diagram of a refrigeration cycle apparatus 1000 according to Embodiment 1. The refrigeration cycle apparatus 1000 is characterized by an ejector 103. As illustrated in Fig. 3 to be referred to below, the ejector 103 is characterized by including a cylindrical flow path 201b (hereinafter also referred to as cylindrical flow path) with a flow path having a cylindrical shape provided in a nozzle 201. The ejector 103 is also characterized in that the inside diameter of the cylindrical flow path 201b, which corresponds to a throat portion, is larger than that of conventional ejectors. By providing the cylindrical flow path 201b, the length of a divergent taper portion can be reduced, and along with increase of the inside diameter of the cylindrical flow path 201b than that of conventional cases, the ease of processing by cutting is improved.

(Refrigeration Cycle Apparatus)

The refrigeration cycle apparatus 1000 includes a compressor 101, a condenser 102 (a radiator), the ejector 103, and a gas-liquid separator 104 configured to separate a two-phase gas-liquid refrigerant that has flowed out of the ejector 103 into a liquid refrigerant and a gas refrigerant, which are connected in order by refrigerant pipings. The refrigeration cycle apparatus 1000 further includes an evaporator 105 connected to the ejector 103 and to the gas-liquid separator 104 with pipings. The ejector 103 has an inlet (103-1) for a motive fluid that is connected to a refrigerant outlet (102-1) of the condenser 102, an inlet (103-2) for a suction fluid that is connected to a refrigerant outlet (105-1) of the evaporator 105, and an outlet (103-3) from which a mixture of the motive fluid and the suction fluid flows out and that is connected to the gas-liquid separator 104. A circuit including the compressor 101, the condenser 102, the ejector 103, and the gas-liquid separator 104 forms a first refrigerant loop circuit. A circuit including the gas-liquid separator 104, the evaporator 105, and the ejector 103 forms a second refrigerant loop circuit. The condenser 102 and the evaporator 105 include fans 102-2 and 105-2, respectively.

(Ejector 103)

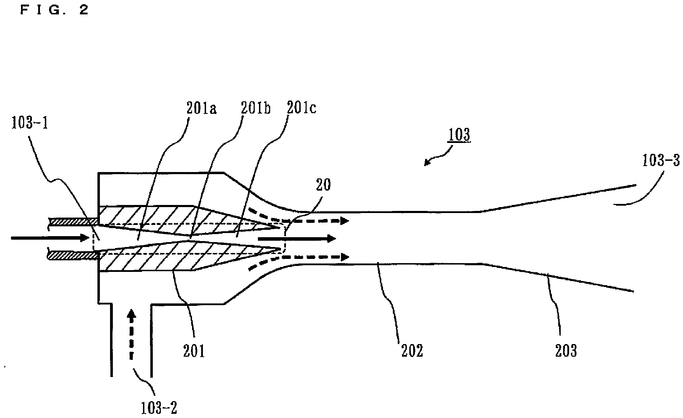

Fig. 2 is a schematic diagram of the ejector 103. The ejector 103 includes the nozzle 201, a mixing section 202, and a diffuser 203. The nozzle 201 has a flow path 20 in which the motive fluid flowing from an upstream side undergoes pressure reduction and is made to flow into the mixing section 202 provided on the downstream side. The flow path 20 of the nozzle 201 includes a convergent taper portion 201a (a narrowing flow path), the cylindrical flow path 201b (a constant-cross-section flow path), and a divergent taper portion 201c (a widening flow path). The cylindrical flow path 201b corresponds to a throat portion at which the cross-sectional area of the flow path through which the refrigerant, that is, the motive fluid, flows is the smallest.

The nozzle 201 reduces the pressure of and expands a high-pressure refrigerant that has flowed out of the condenser 102, thereby ejecting a high-velocity two-phase fluid containing a liquid refrigerant and a gas refrigerant. A refrigerant from the evaporator 105 is sucked through the inlet (103-2) for the suction fluid by utilizing the velocity energy produced by the high-velocity two-phase fluid ejected from the nozzle 201. In the mixing section 202, the refrigerant ejected from the nozzle 201 and the refrigerant sucked through the inlet (103-2) are mixed together while the pressure is increased. In the diffuser 203, the kinetic pressure of the mixed refrigerant is converted into a static pressure.

(Shape of Nozzle Section 201)

Fig. 3 illustrates the nozzle 201 according to Embodiment 1. The cylindrical flow path 201b is a flow path having a cylindrical shape with a diameter D2 and a length L2 (hereinafter also referred to as cylindrical flow path length L2). Arrow 11 represents the direction in which the refrigerant flows. That is, the arrow is oriented toward the downstream side.

    (1) The cross-sectional area of the flow path in the convergent taper portion 201a gradually decreases with a reduction from a diameter D1 to the diameter D2. The convergent taper portion 201a has a cone angle θ1 and a length "L1".

    (2) The cylindrical flow path 201b is a flow path having a cylindrical shape with the diameter D2 and the cylindrical flow path length L2.

    (3) The cross-sectional area of the flow path in the divergent taper portion 201c gradually increases with an increase from the diameter D2 to a diameter D3. The divergent taper portion 201c has a cone angle θ2 and a length "L3".

    (4) The angle θ1 of the convergent taper portion 201a and the angle θ3 of the divergent taper portion are set to about 5° and 1.5° or smaller, respectively, so that the occurrence of any eddy loss that may be caused by abrupt narrowing or abrupt widening is suppressed. Hence, the length "L1" of the convergent taper portion and the length "L3" of the divergent taper portion 201c are geometrically determined by the diameter D1 of the nozzle inlet, the diameter D2 of the cylindrical flow path 201b corresponding to a throat portion, and the diameter D3 of the nozzle outlet. The cylindrical flow path length L2 is much shorter than the total length of the nozzle.

    (5) The nozzle 201 of the ejector 103 may be made of any one of stainless metal, copper or copper alloys, aluminum, and the like.

(Operations of Refrigeration Cycle Apparatus 1000)

Operations performed by the refrigeration cycle apparatus 1000 will now be described.

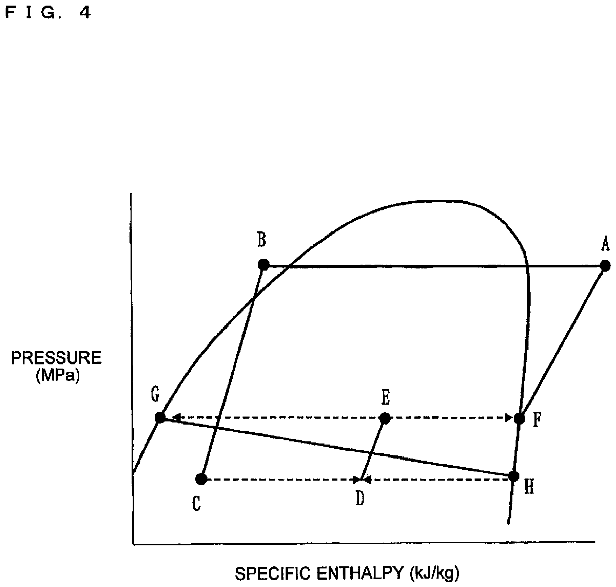

Fig. 4 is a Mollier chart of the refrigeration cycle apparatus 1000 illustrated in Fig. 1.

Referring to Figs. 2 and 4, operations performed by the refrigeration cycle apparatus 1000 will be described. A high-temperature high-pressure gas refrigerant (state A) fed from the compressor 101 is liquefied (state B) in the condenser 102 by transferring heat and flows into the ejector 103 (as the motive fluid) through the inlet (103-1). In the nozzle 201, the motive fluid undergoes pressure reduction and expansion. Then, the motive fluid turns into an ultrafast, two-phase, gas-liquid refrigerant and flows out of the nozzle 201 (state C). With the kinetic energy produced by the motive flow flowing out of the nozzle 201, a refrigerant (suction fluid) is drawn via the inlet (103-2) for the suction fluid, whereby a mixture of the motive fluid and the suction fluid flows into the mixing section 202 (state D). In the mixing section 202, the motive fluid and the suction fluid are mixed together while exchanging their momenta with each other, whereby recovering pressure. In the diffuser 203 also, since the kinetic pressure is converted into a static pressure with the increase in the cross-sectional area of the flow path, pressure is recovered (a state E). The two-phase gas-liquid refrigerant having flowed out of the ejector 103 is separated into a gas refrigerant and a liquid refrigerant by the gas-liquid separator 104. In the gas-liquid separator 104, the gas refrigerant flows into the compressor 101 (state F), whereas the liquid refrigerant flows into the evaporator 105 (state G). The liquid refrigerant receives heat from the surroundings thereof in the evaporator 105 and is evaporated (state H), and is sucked into the ejector 103 through the inlet (103-2) for the suction fluid by the drawing effect produced by the motive fluid. Through this series of operations, a refrigerant circulation loop to the evaporator 105 (a refrigerant circulation circuit including the evaporator 105, the ejector 103, and the gas-liquid separator 104) is established.

According to the above operations, in a refrigeration cycle apparatus employing an ejector, the suction pressure of the compressor can be increased as compared with conventional refrigeration cycle apparatus, thus operating efficiency is improved.

(Case of Ejector without Cylindrical Flow Path Portion 201b)

An operation of the nozzle 201 of the ejector 103 will now be described.

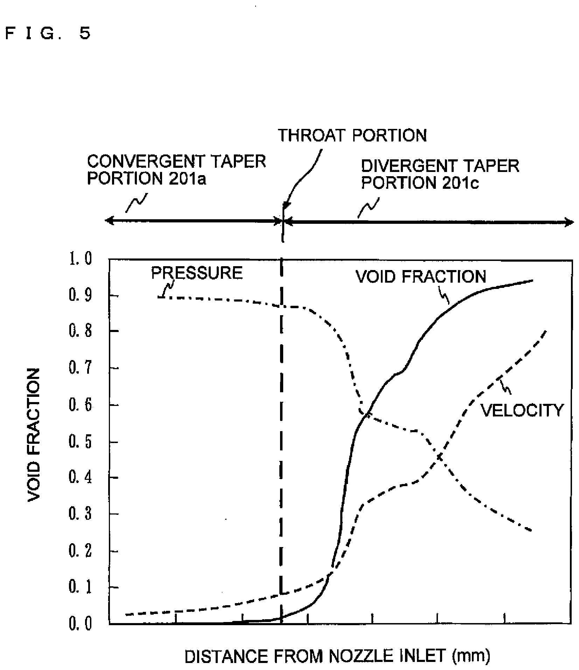

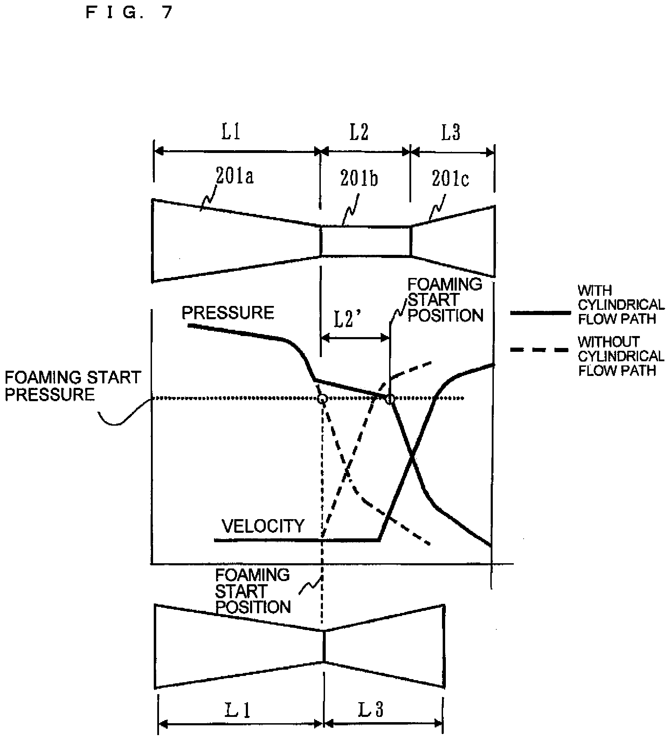

Fig. 5 illustrates the pressure inside the nozzle, the average velocity of the refrigerant, and the void fraction in a case in which there is no cylindrical flow path 201b in the nozzle 201. The scale on the vertical axis is that of the void fraction. The case in which there is no cylindrical flow path 201b refers to a case where the convergent taper portion 201a changes over to the divergent taper portion 201c directly (L2 = 0), as illustrated at the bottom of Fig. 7. In Fig. 5, the horizontal axis represents the distance from the nozzle inlet (the inlet (103-1) for the motive fluid), and the vertical broken line represents the position of the throat portion. Herein, the term "void fraction" refers to the occupied area ratio of the gas refrigerant when the cross-sectional area of the flow path is defined as 1. Zero void fraction is a state in which there is no gas refrigerant present and when void fraction is 1, the flow path is filled with a gas refrigerant. As illustrated in Fig. 5, the refrigerant that has flowed into the nozzle 201 undergoes pressure reduction in the convergent taper portion 201a and in the divergent taper portion 201c and starts to foam when the pressure of the refrigerant is reduced to or below the saturation pressure. The foaming increases the ratio of the gas in the flow path (the void fraction). Accordingly, the velocity of the refrigerant sharply increases. The foaming continues to occur toward the downstream side of the divergent taper portion 201c while decreasing the pressure and increasing the velocity. Accordingly, a high-velocity two-phase refrigerant is ejected from the nozzle.

(Diameter D2 of Cylindrical Flow Path 201b)

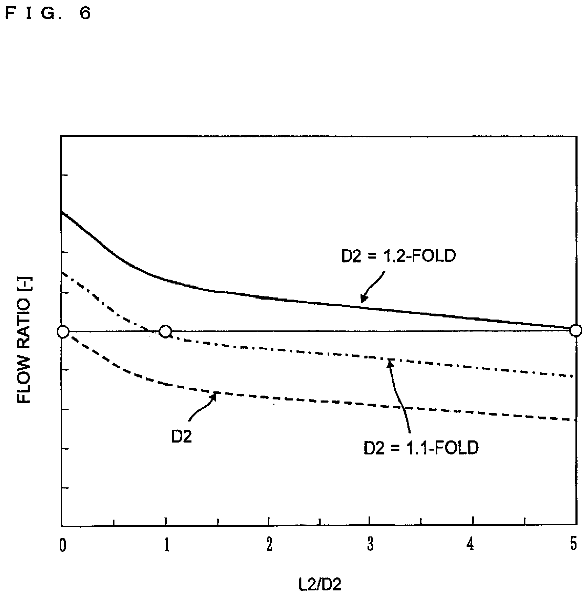

Fig. 6 illustrates flow characteristics of nozzles each including a throat portion corresponding to the cylindrical flow path 201b. The horizontal axis represents the ratio of the cylindrical flow path length L2 of the cylindrical flow path 201b to the diameter D2 of the cylindrical flow path 201b. The vertical axis represents the flow ratio when assuming the flow rate as 1 when the diameter of the throat portion is D2 and when there is no cylindrical flow path (L2 = 0). When the cylindrical flow path length L2 of the cylindrical flow path 201b is increased, the flow rate decreases. This is because friction loss occurring in the cylindrical flow path 201b reduces the pressure and hence reduces the saturation temperature of the refrigerant, whereby causing the refrigerant to start to foam in the cylindrical flow path 201b. The specific volume of a gas refrigerant is substantially larger than the specific volume of a liquid refrigerant. Therefore, a fluid in the form of liquid containing gas, such as a two-phase gas-liquid fluid, does not readily flow. As illustrated in Fig. 6, even when the diameter D2 of the throat portion is increased 1.1-fold and 1.2-fold, flow characteristics exhibit the same tendency with respect to L2/D2. When the diameter D2 of the throat portion is increased, the flow rate increases. According to such characteristics, the same flow rate as that of the nozzle without the cylindrical flow path (L2 = 0) can be achieved by providing the cylindrical flow path 201b and by increasing the diameter D2 of the throat portion. In the exemplary cases illustrated in Fig. 6, the refrigerant can be made to flow at the same flow rate as that of the nozzle without the cylindrical flow path 201b (L = 0) by selecting a cylindrical flow path length L2 in which "L2/D2" becomes about 1 when the diameter D2 of the throat portion is increased 1.1-fold and by selecting a cylindrical flow path length L2 in which "L2/D2" becomes about 5 when the diameter D2 of the throat portion is increased 1.2-fold.

(Assumed Value for Diameter D2)

In the ejector 103 according to Embodiment 1, the diameter D2 of the cylindrical flow path 201b is assumed to be 2 mm or less.

(Reduction of Length L3 of Divergent Taper Portion 201c)

Fig. 7 is a schematic diagram illustrating distributions of pressure and velocity of a refrigerant in the nozzle 201 with the cylindrical flow path 201b and in the nozzle without the cylindrical flow path 201b (L2 = 0). The solid lines indicate the nozzle 201 with the cylindrical flow path 201b and the broken lines indicate the nozzle without the cylindrical flow path 201b. The pressure inside the cylindrical flow path 201b decreases in the flow direction because of friction loss. When the pressure inside the cylindrical flow path 201b reaches a foaming starting pressure (the position denoted by L2'), the refrigerant, which is in a liquid state, foams and expands. Accordingly, the velocity of the refrigerant sharply increases, whereas the pressure of the refrigerant sharply decreases. Because of the friction loss occurring in the cylindrical flow path 201b, the pressure at the inlet of the divergent taper portion 201c is lower than that of the nozzle without the cylindrical flow path 201b. Hence, the pressure reduction in the divergent taper portion 201c in the case where the cylindrical flow path 201b is provided is small. Consequently, the length L3 of the divergent taper portion 201c becomes shorter than that of the nozzle without the cylindrical flow path 201b.

Friction loss ΔP occurring in the cylindrical flow path 201b can be estimated from Equation (1) given below. In accordance with Equation (1), ΔP is calculated with L2' as a parameter. That is, with respect to a difference ΔP between an inlet pressure $P_{IN}$ and a foaming starting pressure $P_{ST}$ in the cylindrical flow path 201b, the foaming start position L2' can be estimated from Equation (1).

[Equation 1]

$$\Delta P = \lambda \frac{\rho \cdot u^2}{2} \cdot \frac{L2'}{D2} \qquad (1)$$

, where λ is coefficient of friction

p is density, and
u is velocity.

According to a literature, the foaming starting pressure may be a pressure in which degree of superheat of the refrigerant (the refrigerant temperature and the saturation: temperature difference) becomes 5K. The cylindrical flow path length L2 may be determined on the basis of this foaming start position L2'.

The flow rate of the refrigerant passing through the nozzle 201 is controllable by adjusting, in accordance with the cylindrical flow path length L2, the position where the refrigerant starts to foam.

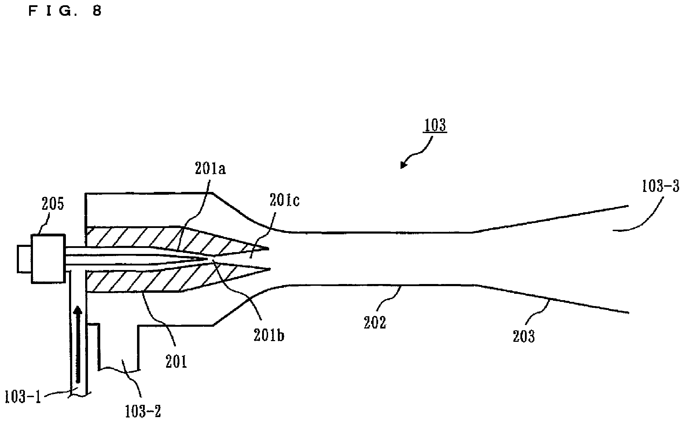

Fig. 8 is a diagram illustrating a case where an ejector 103 having a movable needle valve 205 is employed to the nozzle 201. As illustrated in Fig. 8, the ejector 103 may be fabricated as an ejector into which a movable needle valve 25 that controls the flow rate of the refrigerant is inserted.

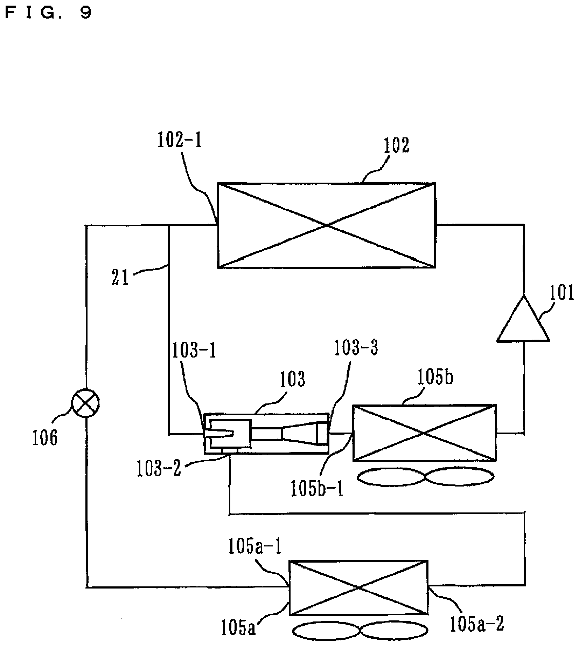

Fig. 9 is a diagram illustrating a configuration of another refrigeration cycle apparatus according to Embodiment 1. In a case where the ejector 103 is provided in the refrigerant circuit (refrigeration cycle apparatus) illustrated in Fig. 9, the same effects as those obtained by the configuration illustrated in Fig. 1 are obtained. In Fig. 9, a compressor 101, a condenser 102 (a radiator), an expansion mechanism 106, a first evaporator 105a, the ejector 103, and a second evaporator 105b are connected in order by refrigerant pipings. The inlet (103-1) of the ejector 103 for the motive fluid is connected to a branch piping 21 branching off from midway of a piping connecting the condenser 102 and the expansion mechanism 106. The inlet (103-2) of the ejector 103 for the suction fluid is connected to a refrigerant outlet (105a-2) of the first evaporator 105a. The outlet (103-3) from which the mixture of the motive fluid and the suction fluid flows out is connected to a refrigerant inlet (105b-1) of the second evaporator 105b. The expansion mechanism 106 is connected to a refrigerant inlet (105a-1) of the first evaporator 105a. A refrigerant outlet (105b-2) of the second evaporator 105b is connected to a suction port of the compressor 101. In such a case, a refrigerant having flowed out of the condenser 102 is branched to the first evaporator 105a and the ejector 103. The refrigerant having flowed out of the first evaporator 105a is sucked into the ejector 103 and undergoes pressure increase. The refrigerant having flowed out of the ejector 103 flows through the second evaporator 105b into the suction port of the compressor 101.

Note that although Embodiment 1 above describes a case where the nozzle 201 has the cylindrical flow path 201b, since the cylindrical flow path 201b is characterized in that the cross-sectional shape thereof does not change in the direction of the flow path, the cross-sectional shape is not limited to a circle and may be an ellipse or the like, as long as the cross-sectional shape does not change in the direction of the flow path. Fig. 3 illustrates a configuration in which only the convergent taper portion is provided on the upstream side of the cylindrical flow path 201b. Alternatively, a two-stage taper portion or "another cylindrical flow path + a convergent taper portion" such as the one illustrated in Fig. 8 may be provided. That is, any with a convergent taper potion in the flow path immediately before the cylindrical flow path 201b will do.

The ejector 103 according to Embodiment 1 includes the cylindrical flow path at the throat portion of the nozzle, whereby foaming is started in the cylindrical flow path. Therefore, the length L3 of the divergent taper portion can be shorter compared to that of the nozzle without the cylindrical flow path. Hence, when manufacturing the divergent taper portion 201c by cutting, the process is facilitated.

The ejector 103 according to Embodiment 1 includes the cylindrical flow path at the throat portion of the nozzle. In addition, the throat portion has an increased diameter D2. Therefore, the ejector 103 allows the refrigerant to flow at a flow rate the same as that of the nozzle without the cylindrical flow path. Moreover, since the diameter D2 is increased, the ease of processing with cutting tools in the manufacturing process is improved. Consequently, manufacturing time is reduced.

The ejector 103 according to Embodiment 1 has an increased diameter D2 of the throat portion and includes the cylindrical flow path. Therefore, machinability is improved. Hence, by finishing the cylindrical flow path 201b and the divergent taper portion 201c with, for example, a reamer or the like, the dimensional accuracy can be improved.

In the ejector 103 according to Embodiment 1, the cylindrical flow path length L2 is much shorter than the total nozzle length. Therefore, the friction loss occurring in the cylindrical flow path is very small relative to the pressure reduction caused by expansion. Hence, power conversion efficiency equivalent to that of the nozzle without the cylindrical flow path is obtained.

On the other hand, since the cylindrical flow path is provided, the total nozzle length becomes greater and material cost increases. Nevertheless, since the cylindrical flow path length L2 is short as mentioned above, the increase in material cost is negligible. The increase in the diameter of the throat portion and the reduction in the length of the divergent taper portion improve machinability. The cost reduction effect with the improvement of machinability is far greater than the increase in material cost.

In the refrigeration cycle apparatus according to Embodiment 1 (Figs. 1 and 9) employing the ejector 103, the refrigerant used may be a fluorocarbon refrigerant or any other refrigerant. For example, the refrigerant used may be a natural refrigerant such as ammonia, carbon dioxide, or hydrocarbon (for example, propane or isobutane), or a low-GWP refrigerant such as HFO1234yf or a mixed refrigerant containing the same.

The refrigeration cycle apparatus according to Embodiment 1 is not limited to an air-conditioning apparatus and may be embodied in a refrigerator-freezer, a chiller, or a water heater.

When an ejector is introduced to a refrigeration cycle apparatus of the conventional art, the diameter of the throat portion of the nozzle included in the ejector is 0.5 to 2 mm and the length of the divergent taper portion that expands the refrigerant is 20 mm or larger. Such a configuration has a problem in that it is difficult to provide a deep narrow hole by cutting. To solve this problem, a cylindrical flow path is provided at the throat portion of the nozzle. Thus, foaming is promoted by utilizing the reduction in the pressure of the refrigerant caused by friction in the cylindrical flow path. Since foaming is thus promoted, the nozzle divergence length can be reduced. In addition, the diameter of the cylindrical flow path is made larger than that of the conventional throat portion. The shortening of the divergent taper portion 201c by employment of the cylindrical flow path and the increase in the diameter of the throat portion (the inside diameter of the cylindrical flow path) facilitate the cutting of the nozzle and reduce cost and time for manufacturing the nozzle.

Reference Signs List

101 compressor; 102 condenser; 103 ejector; 104 gas-liquid separator; 105, 105a, 105b evaporator; 201 nozzle; 201a convergent taper portion; 201b cylindrical flow path; 201c divergent taper portion; 202 mixing section; 203 diffuser; 204 suction section; 205 needle valve; 1000 refrigeration cycle apparatus.

**Claims**

1. An ejector (103) including a nozzle (201) having a flow path in which a motive fluid flowing from an upstream side undergoes pressure reduction and is made to flow into a mixing section (202) provided on a downstream side, the ejector (103) comprising:

    the flow path of the nozzle (201) including

        a narrowing flow path (201a) in which the cross-sectional area of the flow path gradually decreases toward the downstream side,
        a constant-cross-section flow path (201b) having a substantially constant cross-sectional shape while extending from a downstream end of the narrowing flow path, the constant-cross-section flow path being continuous for a predetermined length, and
        a widening flow path (201c) continuous with a downstream end of the constant-cross-section flow path and in which the cross-sectional area of the flow path gradually increases toward the downstream side,

the narrowing flow path takes in the motive fluid in a liquid state and allows the motive fluid in the liquid state to flow into the constant-cross-section flow path while reducing the pressure of the motive fluid in the liquid state, and the constant-cross-section flow path allows the motive fluid in the liquid state start to foam at a midway point of the predetermined length,
**characterized in that** the length of the constant-cross-section flow path is selected from a length of the constant-cross-section flow path in which the flow rate of the constant-cross-section flow path equals the reference flow rate when the diameter of the throat portion is 1.1-fold to 1.2-fold of the reference diameter,
the reference flow rate is an assumed flow rate through the narrowing flow path and the widening flow path that are joined directly without the constant-cross-section flow path in between,
the reference diameter is a minimum diameter of the throat portion when the narrowing flow path and the widening flow path are joined directly.

2. The ejector (103) of claim 1, wherein each of the flow path of the narrowing flow path, the constant-cross-section flow path, and the widening flow path has a substantially circular cross-sectional shape.

3. The ejector (103) of claim 1 or 2, wherein the substantially constant cross-sectional shape of the constant-cross-section flow path is a circle and the circle has a diameter of 2 mm or less.

4. The ejector (103) of claim 1 to 3, further comprising: a needle valve (205) provided in the flow path, the needle valve (205) adjusting the flow rate of the motive fluid.

5. A refrigeration cycle apparatus (1000), comprising:

    a compressor (101), a radiator, an ejector (103) of claim 1, and a gas-liquid separator (104) that are connected in order by refrigerant pipings and an evaporator (105) connected to the ejector (103) and to the gas-liquid separator (104), the ejector (103) including

        an inlet for a motive fluid that is connected to a refrigerant outlet of the radiator,
        an inlet for a suction fluid that is connected to a refrigerant outlet of the evaporator (105), and
        an outlet from which a mixture of the motive fluid and the suction fluid flows out that is connected to the gas-liquid separator (104).

6. A refrigeration cycle apparatus (1000), comprising:

a compressor (101), a radiator, an expansion mechanism, a first evaporator (105a), an ejector (103) of claim 1, and a second evaporator (105b) that are connected in order by refrigerant pipings,

the ejector (103) including

an inlet for a motive fluid that is connected to a branch piping branching off from midway of a piping connecting the radiator and the expansion mechanism,

an inlet for a suction fluid that is connected to a refrigerant outlet of the first evaporator (105a), and

an outlet from which a mixture of the motive fluid and the suction fluid flows out and that is connected to a refrigerant inlet of the second evaporator (105b).

## Patentansprüche

1. Ejektor (103), der eine Düse (201) aufweist, die einen Strömungsweg hat, in dem ein von einer stromaufwärts gelegenen Seite her strömendes Treibfluid eine Druckverringerung erfährt und dazu gebracht wird, in einen auf einer stromabwärts gelegenen Seite bereitgestellten Mischabschnitt (202) zu strömen, wobei der Ejektor (103) Folgendes umfasst:

den Strömungsweg der Düse (201), der
einen sich verschmälernden Strömungsweg (201a), in dem die Querschnittsfläche des Strömungswegs zur stromabwärts gelegenen Seite hin graduell abnimmt,
einen Konstant-Querschnitt-Strömungsweg (201b), der, während er sich von einem stromabwärts gelegenen Ende des sich verschmälernden Strömungswegs aus erstreckt, eine im Wesentlichen konstante Querschnittsform hat, wobei der Konstant-Querschnitt-Strömungsweg über eine vorbestimmte Länge durchgängig ist, und einen sich verbreiternden Strömungsweg (201c), der durchgängig mit einem stromabwärts gelegenen Ende des Konstant-Querschnitt-Strömungswegs verläuft und in dem die Querschnittsfläche des Strömungswegs zur stromabwärts gelegenen Seite hin graduell zunimmt, wobei der sich verschmälernde Strömungsweg das Treibfluid in flüssigem Zustand einlässt und dem Treibfluid im flüssigen Zustand gestattet, in den Konstant-Querschnitt-Strömungsweg zu strömen, während der Druck des Treibfluids im flüssigen Zustand verringert wird, und der Konstant-Querschnitt-Strömungsweg dem Treibfluid im flüssigen Zustand gestattet, an einem Punkt auf halber Strecke der vorbestimmten Länge damit zu beginnen, aufzuschäumen,
**dadurch gekennzeichnet, dass**
die Länge des Konstant-Querschnitt-Strömungswegs ausgewählt ist aus einer Länge des Konstant-Querschnitt-Strömungswegs, in der die Strömungsrate des Konstant-Querschnitt-Strömungswegs der Bezugsströmungsrate gleicht, wenn der Durchmesser des Halsabschnitts das 1,1-Fache bis 1,2-Fache des Bezugsdurchmessers beträgt,
die Bezugsströmungsrate eine angenommene Strömungsrate durch den sich verschmälernden Strömungsweg und den sich verbreiternden Strömungsweg ist, die ohne den Konstant-Querschnitt-Strömungsweg dazwischen unmittelbar zusammengefügt sind, der Bezugsdurchmesser ein Mindestdurchmesser des Halsabschnitts ist, wenn der sich verschmälernde Strömungsweg und der sich verbreiternde Strömungsweg unmittelbar zusammengefügt sind.

2. Ejektor (103) nach Anspruch 1, wobei jeder Strömungsweg des sich verschmälernden Strömungswegs, des Konstant-Querschnitt-Strömungswegs und des sich verbreiternden Strömungswegs eine im Wesentlichen kreisförmige Querschnittsform hat.

3. Ejektor (103) nach Anspruch 1 oder 2, wobei die im Wesentlichen kontante Querschnittsform des konstant Querschnitt Strömungswegs ein Kreis ist und der Kreis einen Durchmesser von 2 mm oder weniger hat.

4. Ejektor (103) nach Anspruch 1 bis 3, ferner umfassend: ein im Strömungsweg bereitgestelltes Nadelventil (205), wobei das Nadelventil (205) die Strömungsrate des Treibfluids einstellt.

5. Kühlkreislaufvorrichtung (1000), umfassend:

einen Verdichter (101), einen Radiator, einen Ejektor (103) nach Anspruch 1 und einen Gas-Flüssigkeitsabscheider (104), die durch Kühlmittelleitungen der Reihe nach verbunden sind, und einen mit dem Ejektor (103) und dem Gas-Flüssigkeitsabscheider (104) verbundenen Verdampfer (105),
wobei der Ejektor (103) aufweist:

einen mit einem Kühlmittelauslass des Radiators verbundenen Einlass für ein Treibfluid,
einen mit einem Kühlmittelauslass des Verdampfers (105) verbundenen Einlass für ein Saugfluid und
einen Auslass, aus dem ein Gemisch aus dem Treibfluid und dem Saugfluid ausströmt, der mit dem Gas-Flüssigkeitsabscheider (104) verbunden ist.

**6.** Kühlkreislaufvorrichtung (1000), umfassend:

einen Verdichter (101), einen Radiator, einen Ausdehnungsmechanismus, einen ersten Verdampfer (105a), einen Ejektor (103) nach Anspruch 1 und einen zweiten Verdampfer (105b), die durch Kühlmittelleitungen der Reihe nach verbunden sind,
wobei der Ejektor (103)
einen Einlass für ein Treibfluid, der mit einer Zweigleitung verbunden ist, die auf halber Strecke von einer den Radiator und den Ausdehnungsmechanismus verbindenden Leitung abzweigt,
einen mit einem Kühlmittelauslass des ersten Verdampfers (105a) verbundenen Einlass für ein Saugfluid und
einen mit einem Kühlmitteleinlass des zweiten Verdampfers (105b) verbundenen Auslass aufweist, aus dem ein Gemisch aus dem Treibfluid und dem Saugfluid ausströmt.

**Revendications**

**1.** Éjecteur (103) qui comprend une buse (201), qui présente un chemin d'écoulement dans lequel un fluide moteur qui circule à partir d'un côté amont, subit une réduction de pression, et est contraint de circuler dans une section mélange (202) disposée d'un côté aval, l'éjecteur (103) comprenant :

le chemin d'écoulement de la buse (201) qui comprend :

un chemin d'écoulement qui se rétrécit (201a), dans lequel la section transversale du chemin d'écoulement décroît de manière progressive vers le côté aval ;
un chemin d'écoulement à section transversale constante (201b) qui présente une forme de section transversale sensiblement constante, tout en s'étendant à partir d'une extrémité aval du chemin d'écoulement qui se rétrécit, le chemin d'écoulement à section transversale constante étant continu sur une longueur prédéterminée ; et
un chemin d'écoulement qui s'élargit (201c) continu avec une extrémité aval du chemin d'écoulement à section transversale constante, et dans lequel la section transversale du chemin d'écoulement croît de manière progressive vers le côté aval ;

le chemin d'écoulement qui se rétrécit fait entrer le fluide moteur dans un état liquide, et permet au fluide moteur qui se trouve à l'état liquide, de s'écouler dans le chemin d'écoulement à section transversale constante, tout en réduisant la pression du fluide moteur à l'état liquide, et le chemin d'écoulement à section transversale constante permet au fluide moteur qui se trouve à l'état liquide, de commencer à mousser au niveau du milieu de la longueur prédéterminée ; **caractérisé en ce que** :

la longueur du chemin d'écoulement à section transversale constante, est sélectionnée à partir de la longueur du chemin d'écoulement à section transversale constante dans laquelle le débit du chemin d'écoulement à section transversale constante, est égal au débit de référence lorsque le diamètre de la partie col est compris entre 1,1 fois et 1,2 fois le diamètre de référence ;
le débit de référence est le débit supposé à travers le chemin d'écoulement qui se rétrécit et le chemin d'écoulement qui s'élargit, qui sont joints directement, en l'absence de chemin d'écoulement à section transversale constante entre eux ;
le diamètre de référence est le diamètre minimum de la partie col lorsque le chemin d'écoulement qui se rétrécit et le chemin d'écoulement qui s'élargit, sont joints directement.

**2.** Éjecteur (103) selon la revendication 1, dans lequel chacun du chemin d'écoulement du chemin d'écoulement qui se rétrécit, du chemin d'écoulement à section transversale constante, et du chemin d'écoulement qui s'élargit, présente une forme de section transversale sensiblement circulaire.

**3.** Éjecteur (103) selon la revendication 1 ou la revendication 2, dans lequel
la forme de section transversale sensiblement constante du chemin d'écoulement à section transversale constante est un cercle, et ce cercle présente un diamètre égal ou inférieur à 2 mm.

**4.** Éjecteur (103) selon l'une quelconque des revendications 1 à 3, comprenant :
une soupape à aiguille (205) disposée dans le chemin d'écoulement, la soupape à aiguille (205) réglant le débit du fluide moteur.

**5.** Appareil à cycle de réfrigération (1000), comprenant :

un compresseur (101), un radiateur, un éjecteur (103) selon la revendication 1, et un séparateur gaz - liquide (104) qui sont connectés dans l'ordre par des canalisations de fluide frigorigène, et un évaporateur (105) connecté à l'éjecteur (103) et au séparateur gaz - liquide (104) ; l'éjecteur (103) comprenant :

une entrée de fluide moteur qui est connectée à une sortie de fluide frigorigène du radiateur ;
une entrée de fluide d'aspiration qui est connectée à une sortie de fluide frigorigène de l'évaporateur (105) ; et
une sortie à partir de laquelle sort un mélange de fluide moteur et de fluide d'aspiration, qui est connectée au séparateur gaz - liquide (104).

6.  Appareil à cycle de réfrigération (1000), comprenant :
un compresseur (101), un radiateur, un mécanisme d'expansion, un premier évaporateur (105a), un éjecteur (103) selon la revendication 1, et un second évaporateur (105b), qui sont connectés dans l'ordre par des canalisations de fluide frigorigène :
l'éjecteur (103) comprenant :

une entrée de fluide moteur qui est connectée à une canalisation de branchement qui se ramifie à partir du milieu d'une canalisation qui connecte le radiateur et le mécanisme d'expansion ;
une entrée de fluide d'aspiration qui est connectée à une sortie du premier évaporateur (105a) ; et
une sortie à partir de laquelle sort un mélange de fluide moteur et de fluide d'aspiration, et qui est connectée à une entrée de fluide frigorigène du second évaporateur (105b).

F I G . 1

F I G . 2

F I G. 3

F I G. 4

PRESSURE
(MPa)

SPECIFIC ENTHALPY (kJ/kg)

FIG. 5

CONVERGENT TAPER PORTION 201a

THROAT PORTION

DIVERGENT TAPER PORTION 201c

PRESSURE

VOID FRACTION

VELOCITY

VOID FRACTION

DISTANCE FROM NOZZLE INLET (mm)

FIG. 6

F I G. 7

FIG. 8

F I G. 9

**EP 2 554 852 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2268656 A
- JP H062964 A
- US 2004052656 A1
- JP 2003139098 A